# EUROPEAN PATENT APPLICATION

(11) **EP 4 553 961 A1**
(43) Date of publication of application: **14.05.2025**
(21) Application number: 24210682.1
(22) Date of filing: 04.11.2024
(51) Int. Cl.: H01M 50/103, H01M 50/15, H01M 50/164

(54) **END COVER ASSEMBLY, ENERGY STORAGE DEVICE, AND ELECTRIC APPARATUS**

(30) Priority: 07.11.2023 CN 202311469778
(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361100 (CN)
(72) Inventor: XIAO, Hepan, Shenzhen, 518110 (CN)
(74) Representative: HGF

(57) **Abstract**

Provided are an end cover assembly, an energy storage device, and an electric apparatus. The end cover assembly includes an end plate, a pole, a press sheet, and a lower insulator. The end cover assembly has a mounting hole. The pole is limited in the mounting hole and has a first end extending beyond a first surface of the end plate. The press sheet is connected to an outer peripheral surface of the first end around the first end in a circumferential direction of the pole. The lower insulator includes an insulation sheet and a boss. The insulation sheet has a third surface and a fourth surface opposite to each other in the thickness direction of the end cover assembly. The insulation sheet is attached to the first surface, and the third surface faces towards the first surface. The insulation sheet further has a via hole penetrating the third surface and the fourth surface. The press sheet is limited in the via hole. The boss integrally protrudes from the fourth surface and surrounds a periphery of the press sheet in the circumferential direction of the pole. The boss has a first inclined surface facing away from the press sheet and a top surface facing away from the third surface. The first inclined surface is connected to the fourth surface and extends obliquely towards an axis of the pole from the fourth surface to the top surface.

## Description

### FIELD

The present disclosure relates to the field of energy storage technologies, and more particularly, to an end cover assembly, an energy storage device including the end cover assembly, and an electric apparatus including the energy storage device.

### BACKGROUND

A rechargeable battery, also known as a charging battery or a storage battery, has been widely used due to its advantages such as a high energy density, a long cycle life, good safety, green and environmental protection. With a growing demand for the secondary battery, performance requirements for the secondary battery are also increasing.

In the related art, the secondary battery generally includes an end cover assembly, an electrode assembly, and a housing. In an actual manufacturing process, the end cover assembly, the electrode assembly, and the housing are manufactured separately. Then, a pole of the end cover assembly and a tab of the electrode assembly are respectively welded by a metal connector, and then the electrode assembly is placed into the housing. Next, an opening of the housing is covered by the end cover assembly and then sealing is carried out through welding. Therefore, an electrolyte is injected through an injection hole formed at the end cover assembly through a manual liquid injection, and then the injection hole is welded and sealed after finishing the injection of the electrolyte.

Currently, the end cover assembly typically includes an end plate, a pole, a press sheet, and a lower insulator. The pole is disposed in a pole hole of the end plate. The press sheet is welded to the pole. The lower insulator is configured to insulate the pole or the press sheet from the end plate.

In the related art, in order to increase an energy density per unit volume of a battery, the lower insulator is generally designed to be thinner. However, such a lower insulator cannot provide good stop for the press sheet, causing the pole to rotate when the metal connector is welded to the pole, which in turn allows the pole to drive the press sheet to rotate about an axis of the pole relative to the lower insulator. As a result, the press sheet will press the lower insulator to deform the lower insulator, affecting product yield.

### SUMMARY

Embodiments of the present disclosure provide an end cover assembly, an energy storage device, and an electric apparatus to solve a problem in the related art in which a press sheet is easily rotated relative to a lower insulator.

An end cover assembly according to the embodiments of the present disclosure includes an end plate, a pole, a press sheet, and a lower insulator. The end plate has a first surface and a second surface opposite to each other in a thickness direction of the end cover assembly. The end plate further has a mounting hole penetrating the first surface and the second surface. The pole is limited in the mounting hole, and has a first end extending beyond the first surface. The press sheet is connected to an outer peripheral surface of the first end around the first end in a circumferential direction of the pole. The lower insulator includes an insulation sheet and a boss. The insulation sheet has a third surface and a fourth surface opposite to each other in the thickness direction of the end cover assembly. The insulation sheet is attached to the first surface. The third surface faces towards the first surface. The insulation sheet further has a via hole penetrating the third surface and the fourth surface. The press sheet is limited in the via hole. The boss integrally protrudes from the fourth surface and surrounds a periphery of the press sheet in the circumferential direction of the pole. The boss has a first inclined surface facing away from the press sheet and a top surface facing away from the third surface. The first inclined surface is connected to the fourth surface and extends obliquely towards an axis of the pole from the fourth surface to the top surface.

In the embodiment of the present disclosure, the lower insulator includes the boss protruding from the fourth surface of the insulation sheet, and the boss surrounds the periphery of the press sheet in the circumferential direction of the pole. In this way, a thickness of a part of the lower insulator surrounding the periphery of the press sheet is increased while maintaining most of the insulation sheet thin. Therefore, the boss and the insulation sheet can together restrict the press sheet from rotating about the axis of the pole relative to the lower insulator. In addition, the first inclined surface of the boss is connected to the fourth surface, and extends obliquely towards the axis of the pole from the fourth surface to the top surface. When the press sheet is pressed against the boss to allow the boss to tend to expand outwardly, the first inclined surface can provide a counter force opposite to a pressing force exerted by the press sheet. Such a pressing force can keep the boss from expanding and deforming to a certain extent. In this way, the boss can continue to prevent the press sheet from rotating. Therefore, with the cooperation between the boss and the first inclined surface, a capability of the lower insulator to stop the press sheet from rotating can be significantly improved, and the thus influence of the rotation of the press sheet relative to the lower insulator when press sheet is driven by the pole on product yield can be avoided.

In an exemplary embodiment of the present disclosure, the boss further has a second inclined surface. The second inclined surface is connected to the top surface and extends obliquely towards the axis of the pole from the top surface to a first hole wall surface of the via hole.

In the embodiment of the present disclosure, the boss further has the second incline surface. The second inclined surface is connected to the top surface and extends obliquely towards the axis of the pole from the top surface to the first hole wall surface of the via hole, to provide a larger distance between the boss and the outer peripheral surface of the press sheet. When the press sheet is welded to the pole, a larger gap between the boss and the press sheet can provide a space for an extension of the press sheet. Therefore, the press sheet is prevented from being deformed due to the pressing of the lower insulator. Further, the lower insulator will not be deformed due to the pressing of the press sheet, thereby avoiding influence on strength due to the deformation of the lower insulator.

In an exemplary embodiment of the present disclosure, a distance between the top surface and the fourth surface is H. A dimension of the top surface in a radial direction of the pole is L. A ratio of L to H ranges from 3 to 30.

In the embodiment of the present disclosure, when the ratio of L to H ranges from 3 to 30, a height of the boss does not increase a thickness of the end cover assembly too much, and thus does not occupy a space of the energy storage device in a third direction, which is beneficial to improving an energy density per unit volume of the energy storage device.

In an exemplary embodiment of the present disclosure, the end plate further has a depression recessed towards the second surface from the first surface. The mounting hole penetrates a bottom surface of the depression. The lower insulator further includes an insulation protrusion protruding from the third surface. The insulation protrusion is accommodated in the depression, and is partially arranged between the press sheet and the bottom surface of the depression.

In the embodiment of the present disclosure, the insulation protrusion for insulating the insulation press sheet and the end plate in the lower insulator is accommodated in the depression, which further reduces the thickness of the end cover assembly.

In an exemplary embodiment of the present disclosure, the insulation protrusion includes a first segment and a second segment. The first segment extends beyond the third surface in the thickness direction of the end cover assembly, and a side surface of the first segment faces towards the pole being flush with a first hole wall surface of the via hole. The second segment is connected to the side surface of the first segment facing towards the pole and, is arranged between the press sheet and the bottom surface of the depression.

In the embodiment of the present disclosure, the first segment extends beyond the third surface, and the boss protrudes from the fourth surface. The first segment, the boss, and a part of the insulation sheet close to the press sheet together surround the periphery of the press sheet, and they can all stop the press sheet from rotating about the axis of the pole. An arrangement of the first segment further increases a thickness of the part of the lower insulator close to the press sheet, which further improves the capability of the lower insulator to stop the press sheet from rotating.

In an exemplary embodiment of the present disclosure, the press sheet is partially accommodated in the depression in the thickness direction of the end cover assembly.

In the embodiment of the present disclosure, the end plate has the depression, and the press sheet is partially accommodated in the depression. Therefore, the press sheet will not protrude from the first surface of the end plate too much, and thus the thickness of the end cover assembly to be further reduced.

In an exemplary embodiment of the present disclosure, each of two ends of the lower insulator in a length direction of the end cover assembly is provided with a protrusion. The protrusion protrudes from the fourth surface. The insulation sheet has a first recesses formed in a region of the third surface of the insulation sheet corresponding to the protrusion. The first recess is recessed from the third surface towards the protrusion in the thickness direction of the end cover assembly. The first recess has two first sidewalls opposite to each other in the length direction of the end cover assembly and two second sidewalls opposite to each other in a width direction of the end cover assembly. Each of the two first sidewalls has a plurality of first through holes arranged in the width direction of the end cover assembly. Each of the plurality of first through holes penetrates the first sidewall in the length direction of the end cover assembly. Each of the two second sidewalls has a second through hole penetrating the second sidewall in the width direction of the end cover assembly. The first recess has a plurality of third through holes formed on a first bottom wall of the first recess, and the plurality of third through holes are arranged in the width direction of the end cover assembly. Each of the plurality of third through holes penetrates the first bottom wall in the thickness direction of the end cover assembly. The first recess is provided with a plurality of reinforcement plates. Each of the plurality of reinforcement plates protrudes from a bottom surface of the first recess and is connected between the two first sidewalls. The plurality of reinforcement plates are arranged at intervals in the width direction of the end cover assembly and divides the first recess into a plurality of backflow grooves. The plurality of backflow grooves are respectively in communication with the plurality of first through holes at each of the two first sidewalls, and is respectively in communication with the plurality of third through holes.

In the embodiment of the present disclosure, each backflow groove is in communication with both the third through hole and the first through hole. Two backflow grooves located at ends of the plurality of backflow grooves in a second direction are also in communication with the second through hole. The first through hole, the second through hole, and the third through hole can guide accumulated liquid remaining in the backflow groove back to the electrode assembly. In this way, an electrolyte can be returned and reused. Therefore, the electrolyte can be prevented from remaining in the backflow groove, improving a wettability of the electrode assembly and prolonging a cycle life of the energy storage device.

In an exemplary embodiment of the present disclosure, each of the plurality of reinforcement plates has a fourth through hole penetrating the reinforcement plate in the width direction of the end cover assembly.

In the embodiment of the present disclosure, when the energy storage device is placed laterally or in other inclined postures, the fourth through hole can allow the electrolyte to flow between two adjacent backflow grooves. In this way, the electrolyte in the backflow groove located at one end of the plurality of backflow grooves in the second direction flows into the backflow groove located at another end of the plurality of backflow grooves through the plurality of fourth through holes, and then flows back to the electrode assembly through the second through hole. Therefore, a problem that the electrolyte in the backflow groove is not able to flow back to the electrode assembly only through the first through hole and the third through hole but remains in the backflow groove due to a fact that the energy storage device is in a certain inclined posture can be avoided.

In an exemplary embodiment of the present disclosure, each of the plurality of backflow grooves has a sloped surface on a bottom of the backflow groove. The sloped surface is connected to a side surface of the backflow groove and extends away from the third surface, and the sloped surface is connected to a second hole wall surface of a third through hole of the plurality of third through hole corresponding to the backflow groove.

In the embodiment of the present disclosure, each of the plurality of backflow grooves has the sloped surface on the bottom of the backflow groove. An end of the sloped surface connected to the third through hole is a lowest part of the backflow groove. In this way, the electrolyte can easily flow to the third through hole along the sloped surface, and then flow back through the third through hole. Therefore, the electrolyte can be prevented from being adhered to the bottom of the backflow groove, which would result in insufficient backflow.

In an exemplary embodiment of the present disclosure, the end plate further has an explosion-proof hole penetrating the first surface and the second surface. The end cover assembly further includes an explosion-proof valve connected to the end plate and closing the explosion-proof hole. The lower insulator is provided with a projection corresponding to the explosion-proof valve, and the projection protrudes from the fourth surface. The insulation sheet has a second recess formed in a region of the third surface of the insulation sheet corresponding to the projection. The second recess is recessed towards the projection from the third surface in the thickness direction of the end cover assembly. The second recess has two third sidewalls opposite to each other in a length direction of the end cover assembly and two fourth sidewalls opposite to each other in a width direction of the end cover assembly. Each of the two third sidewalls has a fifth through hole penetrating the third sidewall in the length direction of the end cover assembly. Each of the two fourth sidewalls has a sixth through hole penetrating the fourth sidewall in the width direction of the end cover assembly.

In the embodiment of the present disclosure, the fifth through hole and the sixth through hole can guide accumulated liquid remaining in the second recess back to the electrode assembly. In this way, the electrolyte can be returned and reused. Therefore, the electrolyte can be prevented from remaining in the second recess, improving the wettability of the electrode assembly and prolonging the cycle life of the energy storage device.

In an exemplary embodiment of the present disclosure, the projection includes a middle section and two side sections. The middle section corresponds to the explosion-proof valve. The two side sections are respectively connected to two ends of the middle section in the width direction of the end cover assembly. A height by which the middle section protrudes from the fourth surface is smaller than a height by which the two side sections protrudes from the fourth surface. The second recess includes a first sub-recess and two second sub-recesses. The first sub-recess is recessed towards the middle section from the third surface in the thickness direction of the end cover assembly. The two second sub-recesses are recessed towards the two side sections from the third surface in the thickness direction of the end cover assembly, respectively. Each of the two second sub-recesses has one of the two fourth sidewalls and a sub-recess sidewall opposite to the fourth sidewall in the width direction of the end cover assembly. Two sides of a second bottom wall of the first sub-recess in the width direction of the end cover assembly are respectively connected to two sub-recess sidewalls. Each of the sub-recess sidewalls has a seventh through hole at a connection between the sub-recess sidewall and the second bottom wall. The seventh through hole penetrates the sub-recess sidewall in the thickness direction of the end cover assembly.

In the embodiment of the present disclosure, the seventh through hole can guide accumulated liquid remaining in the second sub-recess back to the electrode assembly. In this way, the electrolyte can be returned and reused. Therefore, the electrolyte can be prevented from remaining in the second sub-recess, improving the wettability of the electrode assembly and prolonging the cycle life of the energy storage device.

An energy storage device according to the embodiments of the present disclosure includes a housing, an electrode assembly, and the end cover assembly as described in any one of the above embodiments. The housing has an accommodation chamber with an opening. The electrode assembly is accommodated in the accommodation chamber. The end cover assembly closes the opening of the accommodation chamber.

An electric apparatus according to the embodiments of the present disclosure includes the above energy storage device. The energy storage device is configured to supply power to the electric apparatus.

### BRIEF DESCRIPTION OF THE DRAWINGS

FIG. 1 is a schematic structural view of a residential energy storage system according to an exemplary embodiment.
FIG. 2 is a schematic exploded view of a square battery according to an exemplary embodiment.
FIG. 3 is a schematic exploded view of an end cover assembly according to an exemplary embodiment.
FIG. 4 is a schematic structural view of the end plate in FIG. 3 when viewed in one direction.
FIG. 5 is a schematic structural view of the end plate in FIG. 3 when viewed in another direction.
FIG. 6 is a sectional view taken along line A-A in FIG. 2.
FIG. 7 is a partially enlarged view of part X1 in FIG. 6.
FIG. 8 is a partially enlarged view of part X2 in FIG. 7.
FIG. 9 is a schematic structural view of a lower insulator in FIG. 3 when viewed in one direction.
FIG. 10 is a schematic structural view of a structure of the lower insulator in FIG. 3 when viewed in another direction.

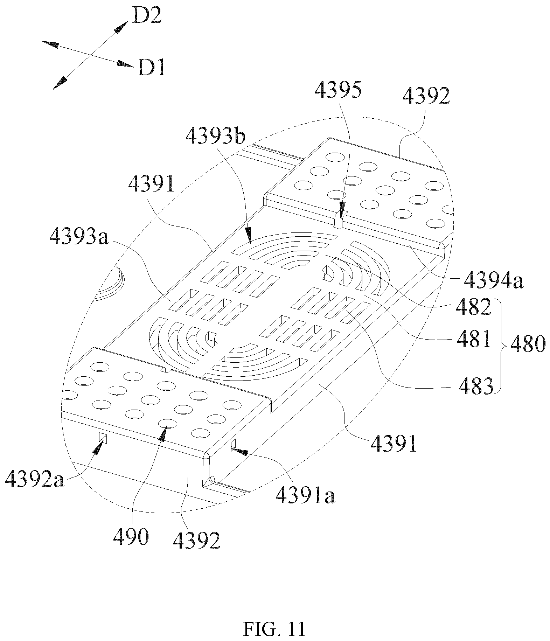

FIG. 11 is a partially enlarged view of part X3 in FIG. 10.
FIG. 12 is a schematic perspective view of an end cover assembly according to an exemplary embodiment.
FIG. 13 is a partially enlarged view of part X4 in FIG. 12.
FIG. 14 is a schematic top view of a lower insulator according to an exemplary embodiment.
FIG. 15 is a sectional view taken along line B-B in FIG. 14.
FIG. 16 is a schematic top view of a lower insulator according to another exemplary embodiment.
FIG. 17 is a sectional view taken along line C-C in FIG. 16.
FIG. 18 is a schematic structural view of an electric apparatus according to an exemplary embodiment.

### Reference numerals are explained as follows:

1, energy storage device;
2, electric energy conversion device;
3, user load;
200, housing; 201, opening; 210, accommodation chamber;
400, end cover assembly;
410, end plate; 410a, first surface; 410b, second surface; 411, mounting hole; 412, depression; 413, explosion-proof hole; 414, injection hole;
420, pole; 421, pole body; 4211, first end; 4212, second end; 422, flange;
430, lower insulator; 431, insulation sheet; 431a, third surface; 431b, fourth surface; 4311, via hole; 4311a, first hole wall surface; 4312, aperture; 432, boss; 432a, first inclined surface; 432b, top surface; 432c, second inclined surface; 433, insulation protrusion; 4331, first segment; 4332, second segment; 434, protrusion; 435, first recess; 4351, first sidewall; 4351a, first through hole; 4352, second sidewall; 4352a, second through hole; 4353, first bottom wall; 4353a, third through hole; 4353b, second hole wall surface; 436, reinforcement plate; 436a, fourth through hole; 437, backflow groove; 4371, sloped surface; 438, projection; 4381, middle section; 4382, side section; 439, second recess; 4391, third sidewall; 4391a, fifth through hole; 4392, fourth sidewall; 4392a, sixth through hole; 4393, first sub-recess; 4393a, second bottom wall; 4393b, perforation; 4394, second sub-recess; 4394a, sub-recess sidewall; 4395, seventh through hole;
440, press sheet; 450, explosion-proof valve; 460, upper insulator; 470, seal; 480, grating structure; 481, first rib; 482, second rib; 483, third rib; 490, vent hole;
600, electrode assembly;
D1, first direction; D2, second direction; D3, third direction.

### DETAILED DESCRIPTION

Exemplary embodiments will now be described in detail below with reference to the accompanying drawings. However, the exemplary embodiments can be implemented in various forms, and should not be construed as being limited to examples set forth herein. On the contrary, the exemplary embodiments are provided to facilitate a thorough and comprehensive description of the present disclosure, and fully convey the concept of the exemplary embodiments to those skilled in the art. Same reference numerals in the figures denote same or similar parts, and thus repeated descriptions of the same reference numerals will be omitted here.

Since the desired energy has strong temporal and spatial characteristics, in order to reasonably utilize energy and improve a utilization rate of the energy, a medium or apparatus is desired to store the energy directly or store the energy by converting the energy of one form into energy of another form, and then release the energy in a specific form based on the future applications.

At present, green energy mainly includes light energy, wind energy, water potential, and the like. Light energy and wind energy generally have strong intermittency and fluctuation, which will cause voltage instability in a green power grid (insufficient electricity at peak power consumption and too much electricity at low power consumption). In addition, unstable voltage will cause damage to electricity. As a result, a problem of "wind and light abandonment" may be triggered by insufficient demand for electricity or insufficient capacity of the power grid.

To solve the problem of insufficient demand for electricity or insufficient capacity of the power grid, an energy storage device is necessary. The energy storage device can convert electrical energy into energy of other forms by physical or chemical means and then to store such energy, and the energy stored in the energy storage device will be released by converting the stored energy into electrical energy if desired. That is, the energy storage device is similar to a large "rechargeable battery". When the light energy and wind energy are sufficient, the electrical energy is stored, and the stored electrical energy is released if desired.

Current application scenarios of energy storage are relatively wide, and include generation-side energy storage, grid-side energy storage, renewable energy grid-connected energy storage, user-side energy storage, and the like. Correspondingly, energy storage devices include as follows.
(1) large-sized energy storage containers applied to the grid-side energy storage scenarios. The large-sized energy storage containers can be used as high-quality active and reactive power regulation power sources in the power grid to achieve load matching of the electrical energy in time and space, enhance renewable energy consumption capacity, and are of great significance in power grid system standby, peak load power supply pressure relief, and frequency regulation during peak and off-peak periods.
(2) small and medium-sized energy storage cabinets applied to industrial and commercial energy storage scenarios (banks, shopping malls, etc.) on the user side and household small-sized energy storage boxes applied to household energy storage scenarios on the user side. These cabinets and boxes mainly have operation modes of "peak clipping and valley filling". Due to a large price difference between a peak and a valley based on the demand for electricity consumption, when the user has the energy storage device, the storage cabinet/box is usually recharged during a low electricity price period to reduce the cost. The electricity in the energy storage device is then discharged for use during a peak electricity price to save on electricity bills. In addition, in remote areas and areas with high incidences of natural disasters such as earthquakes and hurricanes, a household energy storage device can provide backup power for the user and the power grid, eliminating inconvenience caused by frequent power outages due to disasters or other reasons.

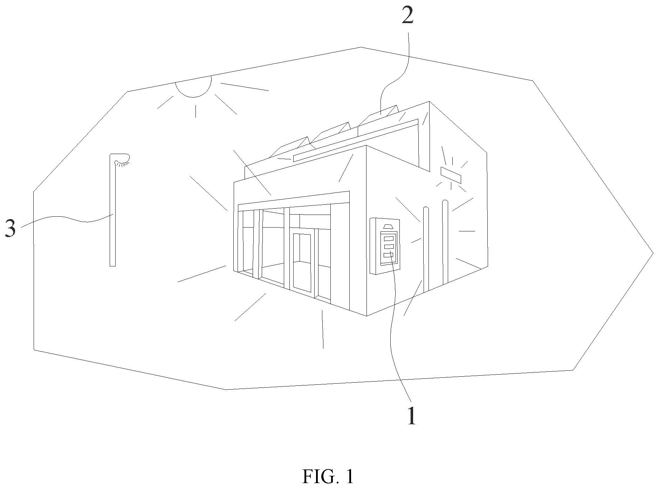

Taking the household energy storage scenario in the user-side energy storage as an example, FIG. 1 shows a household energy storage system. The household energy storage system includes an energy storage device 1, an electric energy conversion device 2 (such as a photovoltaic panel), and a user load 3 (such as a street lamp, a household appliance). The energy storage device 1 is a small energy storage box, which can be mounted on an outdoor wall through a wall-hanging manner. In an exemplary embodiment of the present disclosure, the electric energy conversion device 2 can convert solar energy into electric energy during the low electricity price period, and store the electric energy through the energy storage device 1. Then, the stored electric energy can be supplied to the user load 3 for use during the peak electricity price period, or can be supplied to the user load 3 for use during a power grid outage.

In combination with the above-described energy storage by physical or electrochemical means, taking electrochemical energy storage as an example, the energy storage device 1 may include at least one group of chemical batteries, which utilizes chemical elements within the chemical batteries as an energy storage medium in order to realize charge/discharge through a chemical reaction or change in the energy storage medium. That is, the electric energy generated by light energy and wind energy is stored in the at least one group of chemical batteries through a chemical reaction or change in the energy storage medium. When the usage of external electric energy reaches a peak, the electric energy stored in the at least one group of chemical batteries is released for use through the chemical reaction or change in the energy storage medium, or transferred to places where electric energy is scarce for reuse.

Embodiments of the present disclosure provide an energy storage device 1. The energy storage device 1 may be, but is not limited to, a battery cell (secondary battery), a battery module composed of battery cells, a battery pack, a battery system, and the like. The battery cell may be a lithium-ion battery, a lithium-sulfur battery, a sodium lithium-ion battery, a sodium ion battery, a magnesium ion battery, etc., and may be cylindrical, flat, rectangular, etc., and the present disclosure is not limited in this regard. Next, the energy storage device 1 will be described in detail by taking a square battery as the energy storage device 1 as an example.

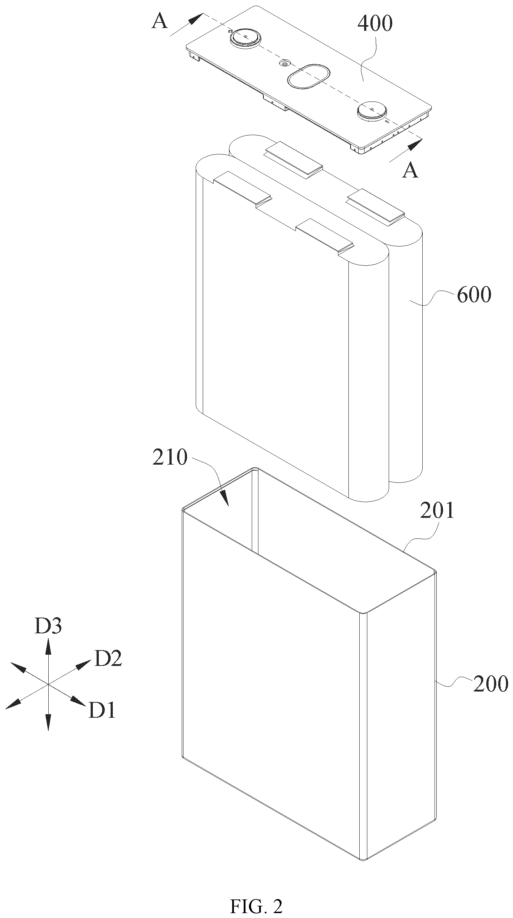

As shown in FIG. 2, the energy storage device 1 according to the embodiments of the present disclosure includes a housing 200, an electrode assembly 600, and an end cover assembly 400. The housing 200 includes an accommodation chamber 210 with an opening 201. The electrode assembly 600 is accommodated in the accommodation chamber 210. The end cover assembly 400 is connected to the housing 200 and closes the opening 201 of the accommodation chamber 210.

It should be understood that terms "include", "have", and any variations thereof in the embodiments of the present disclosure, are intended to cover non-exclusive inclusions. For example, a process, method, system, product, or device that includes a series of steps or units is not necessarily limited to those clearly listed steps or units, and may also include other steps or units that are not clearly listed or are inherent to the process, method, product, or device.

The housing 200 may be a cylindrical structure having the opening 201 at an end of the housing 200. In this case, the energy storage device 1 includes one end cover assembly 400 that seals the opening 201. In other embodiments of the present disclosure, the housing 200 may also be a cylindrical structure having openings 201 at two ends of the housing 200. In this case, the energy storage device 1 may include one end cover assembly 400 and one cover plate, or the energy storage device 1 may include two end cover assemblies 400. In this way, the one end cover assembly 400 and the one cover plate, or the two end cover assemblies 400 can seal the two openings 201 of the housing 200, respectively.

The electrode assembly 600 includes a positive electrode plate, a negative electrode plate, and a separator. An operation of the battery cell mainly relies on a movement of metallic ions between the positive electrode plate and the negative electrode plate. The positive electrode plate includes a positive current collector and a positive active material layer. The positive active material layer is coated on a surface of the positive current collector. Apart of the positive current collector that is not coated with the positive active material layer protrudes from a part of the positive current collector that has been coated with the positive active material layer. The part of the positive current collector that is not coated with the positive active material layer serves as a positive tab. Taking the lithium-ion battery as an example, the positive current collector may be made of aluminum, and the positive active material may be lithium cobalt oxide, lithium iron phosphate, ternary lithium, lithium manganate, or the like. The negative electrode plate includes a negative current collector and a negative active material layer. The negative active material layer is coated on a surface of the negative current collector. A part of the negative current collector that is not coated with the negative active material layer protrudes from a part of the negative current collector that has been coated with the negative active material layer. The part of the negative current collector that is not coated with the negative active material layer serves as a negative tab. The negative current collector may be made of copper, and the negative active material may be carbon, silicon, or the like. The separator may be made of Polypropylene (PP), Polyethylene (PE), or the like. In addition, the electrode assembly 600 may have a winding structure or a laminated structure, and the embodiments of the present disclosure are not limited thereto.

In an exemplary embodiment of the present disclosure, an outer side of the electrode assembly 600 may further be covered with an insulation film (not shown). The insulation film is configured to protect a cell from being scratched. The insulation film is wrapped around an outer surface of the electrode assembly 600, and a side of the insulation film is connected to the end cover assembly 400 through hot melt bonding for example.

For ease of description and understanding, a length direction of the end cover assembly 400 shown in FIG. 2 is defined as a first direction D1, a width direction of the end cover assembly 400 shown in FIG. 2 is defined as a second direction D2, and a thickness direction of the end cover assembly 400 shown in FIG. 2 is defined as a third direction D3. Further, the first direction D1, the second direction D2, and the third direction D3 are perpendicular to each other.

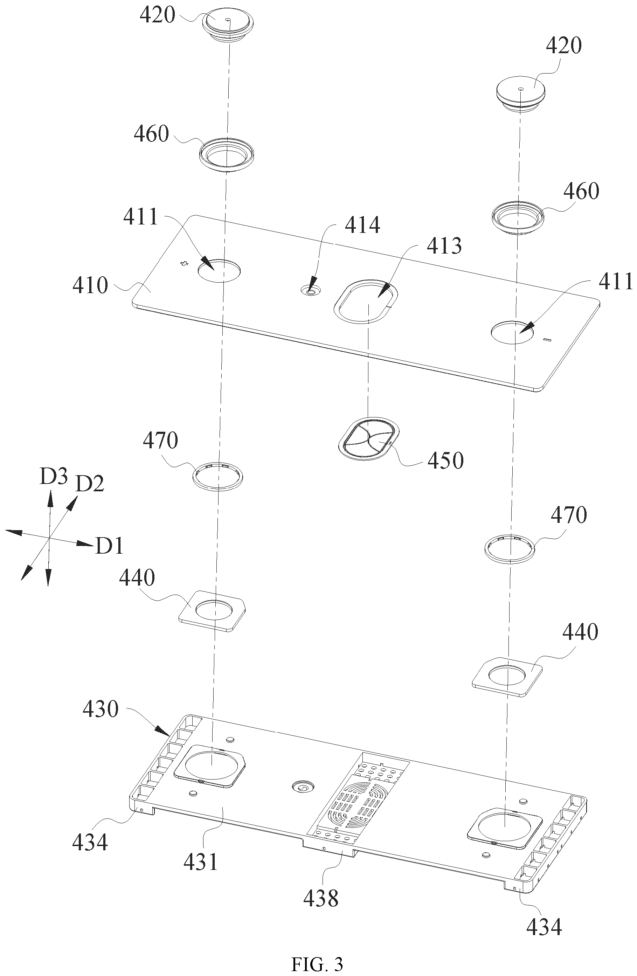

As shown in FIG. 3, the end cover assembly 400 includes an end plate 410, a pole 420, a press sheet 440, an upper insulator 460, and a lower insulator 430. Each of the pole 420, the press sheet 440, the upper insulator 460, and the lower insulator 430 is mounted at end plate 410. In the embodiment of the present disclosure, the end plate 410 is a glossy aluminum foil. The upper insulator 460 and the lower insulator 430 are made of an insulation material, such as plastic. The lower insulator 430 and the end plate 410 are stacked together, and the lower insulator 430 is configured to insulate the pole 420 from the end plate 410. The upper insulator 460 is wrapped around the pole 420 in a circumferential direction of the pole 420 to insulate the pole 420 from the end plate 410. The press sheet 440 is connected to the pole 420, e.g., through welding.

In the embodiment of the present disclosure, two poles 420, two press sheets 440, and two upper insulators 460 are provided. The two poles 420 are a positive pole and a negative pole, respectively. The two press sheets 440 are connected to the two poles 420, respectively. The two upper insulators 460 are respectively wrapped around the two poles 420 to insulate each pole 420 from the end plate 410.

Two sets of poles 420, press sheets 440, and upper insulators 460 are respectively mounted at two ends of the end plate 410 in the length direction (the first direction D1) of the end cover assembly 400.

Referring to FIG. 3, the end cover assembly 400 further includes two seals 470. The two seals are configured to perform sealing between the two press sheets 440 and the end plate 410 to prevent foreign matters outside the housing 200 from entering the housing 200 through gaps between the poles 420 and the end plate 410. In the embodiment of the present disclosure, the seals 470 are each a sealing ring surrounding the pole 420 in the circumferential direction of the pole 420.

In an exemplary embodiment of the present disclosure, the end cover assembly 400 further includes an explosion-proof valve 450 connected to the end plate 410. The explosion-proof valve 450 is configured to explode and exhaust gas generated in the accommodation chamber 210 of the housing 200 when a gas pressure within the energy storage device 1 reaches a predetermined pressure threshold, preventing the battery from bulging and then exploding, which can further improv the safety of the energy storage device 1.

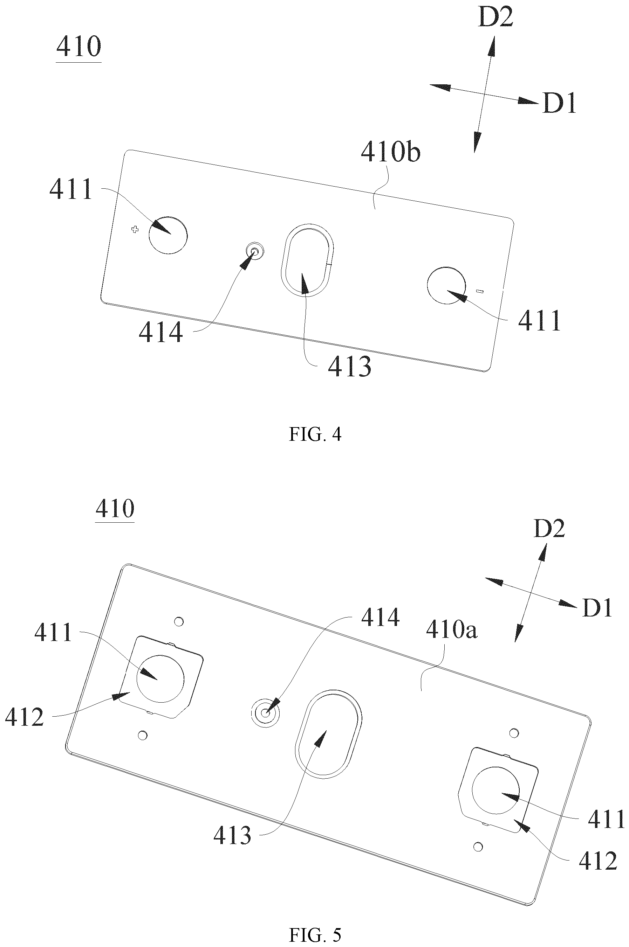

As shown in FIG. 4 and FIG. 5, the end plate 410 has a first surface 410a and a second surface 410b opposite to each other in the thickness direction (the third direction D3) of the end cover assembly 400. In this embodiment, the first surface 410a is defined as a surface facing towards the electrode assembly 600, and the second surface 410b is defined as a surface facing away from the electrode assembly 600. The end plate 410 further has a mounting hole 411 penetrating the first surface 410a and the second surface 410b. In the embodiment of the present disclosure, the end plate 410 has two mounting holes 411, and the two mounting holes 411 are respectively formed at the two ends of the end plate 410 in the first direction D1. The two poles 420 are limited in two mounting holes 411, respectively.

In an embodiment, each of the mounting holes 411 may be in a circular shape, and the present disclosure is not limited in this regard. For example, in other embodiments, the mounting hole 411 may also be a rectangular, elliptical shape or other shapes.

The end plate 410 also has an explosion-proof hole 413 penetrating the first surface 410a and the second surface 410b. The explosion-proof valve 450 is connected to the end plate 410 and closes the explosion-proof hole 413. In the embodiment of the present disclosure, the explosion-proof hole 413 is located at a middle part of the end plate 410 in the first direction D1 between the two mounting holes 411.

In an embodiment, the explosion-proof hole 413 may be in, but is not limited to, a waist-circle shape. The waist-circle shape refers to a closed shape formed by dividing a circle into two semi-circular arcs through a center of the circle and translating the two semi-circular arcs inversely to each other and connecting endpoints of the two semi-circular arcs with two parallel lines of equal lengths.

Referring to FIG. 4 and FIG. 5, the end plate 410 further has an injection hole 414 penetrating the first surface 410a and the second surface 410b. An electrolyte may be injected into the accommodation chamber 210 of the housing 200 through the injection hole 414. After completing the injection of the electrolyte, the injection hole 414 may be sealed with a sealing cap (not shown) to prevent leakage of the electrolyte.

In an embodiment, the injection hole 414 is formed between the explosion-proof hole 413 and one of the two mounting holes 411, and is located closer to the explosion-proof hole 413.

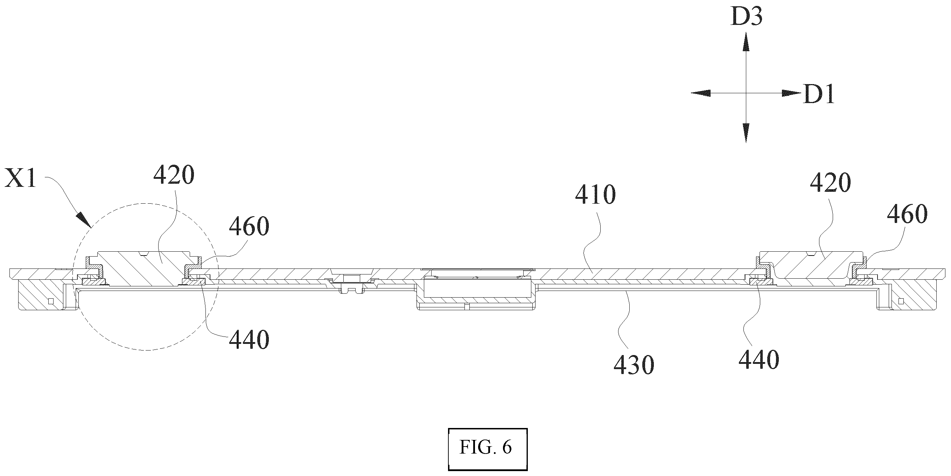

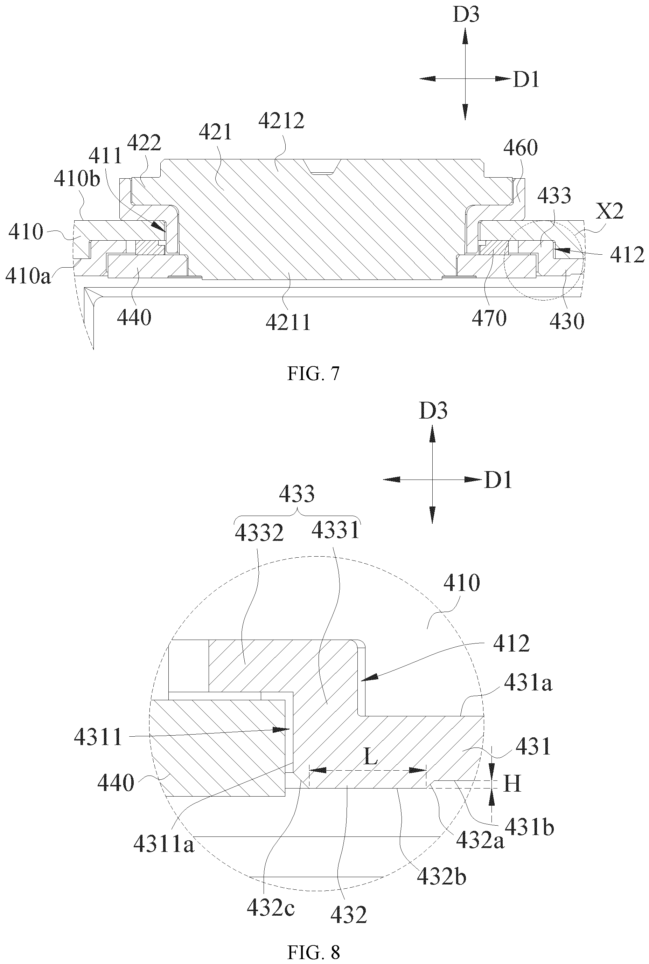

A connection relationship among the end plate 410, the pole 420, the press sheet 440, and the lower insulator 430 will be described in detail below with reference to FIG. 6 and FIG. 7. It should be noted that the connection relationships of the two sets of the poles 420, the press sheets 440 and the lower insulators 430 in the embodiments of the present disclosure are similar, and only one of the two sets will be described as an example.

As shown in FIG. 6 and FIG. 7, the pole 420 includes a pole body 421 and a flange 422. The pole body 421 is limited in the mounting hole 411. The pole body 421 has a first end 4211 extending beyond the first surface 410a and a second end 4212 extending beyond the second surface 410b. The press sheet 440 is connected to an outer peripheral surface of the first end 4211 around the first end 4211 in the circumferential direction of the pole 420. The flange 422 is connected to an outer peripheral surface of the second end 4212 around the second end 4212 in the circumferential direction of the pole 420.

The upper insulator 460 passes through the mounting hole 411 and is wrapped around an outer peripheral surface of the pole body 421 and an outer peripheral surface of the flange 422. An orthographic projection of the flange 422 on the second surface 410b in the third direction D3 is located on the second surface 410b, to allow the upper insulator 460 to be partially sandwiched between the flange 422 and the end plate 410. The seal 470 surrounds a periphery of the upper insulator 460 and is sandwiched between the press sheet 440 and the end plate 410.

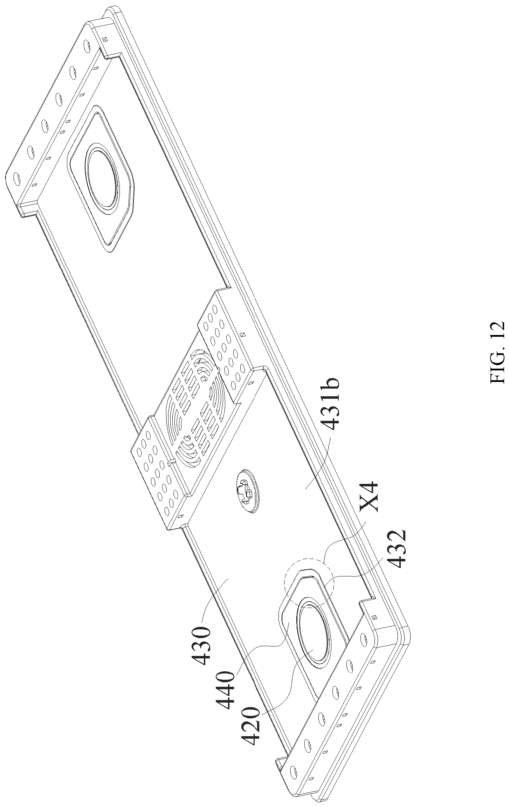

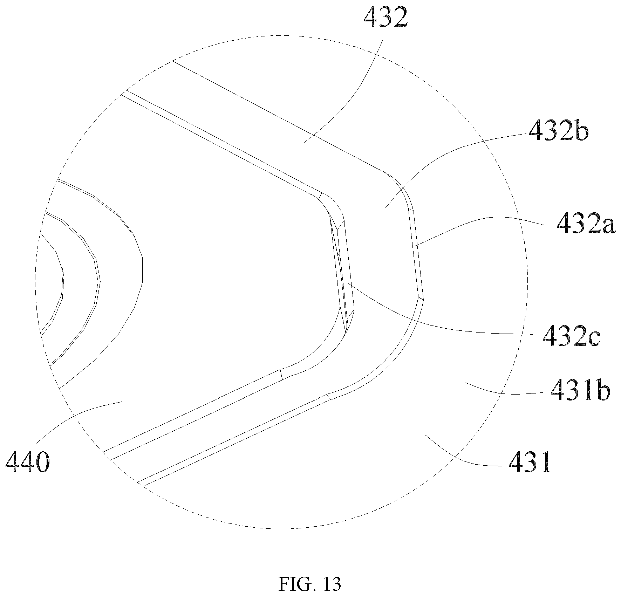

As shown in FIG. 8, FIG. 12, and FIG. 13, the lower insulator 430 includes an insulation sheet 431 and a boss 432. The insulation sheet 431 has a third surface 431a and a fourth surface 431b opposite to each other in the thickness direction (the third direction D3) of the end cover assembly 400. The insulation sheet 431 is attached to the first surface 410a, and the third surface 431a faces towards the first surface 410a. The insulation sheet 431 further has a via hole 4311 penetrating the third surface 431a and the fourth surface 431b. The pole body 421 passes through the via hole 4311, and the press sheet 440 is limited in the via hole 4311. The boss 432 integrally protrudes from the fourth surface 431b and surrounds a periphery of the press sheet 440 in the circumferential direction of the pole 420. The boss 432 has a first inclined surface 432a facing away from the press sheet 440 and a top surface 432b facing away from the insulation sheet 431. The first inclined surface 432a is connected to the fourth surface 431b and extends obliquely towards an axis of the pole 420 from the fourth surface 431b to the top surface 432b.

In the embodiment of the present disclosure, the lower insulator 430 includes the boss 432 protruding from the fourth surface 431b of the insulation sheet 431, and the boss 432 surrounds the periphery of the press sheet 440 in the circumferential direction of the pole 420. In this way, while maintaining most of the insulation sheet 431 to be relatively thin, a thickness of a part of the lower insulator 430 surrounding the periphery of the press sheet 440 is increased, allowing the boss 432 and insulation sheet 431 together to restrict a rotation of the press sheet 440 relative to lower insulator 430 about the axis of the pole 420. In addition, the first inclined surface 432a of the boss 432 is connected to the fourth surface 431b, and extends obliquely towards the axis of the pole 420 from the fourth surface 431b to the top surface 432b. When the press sheet 440 is pressed against the boss 432 to allow the boss 432 to tend to expand outwardly, the first inclined surface 432a can provide a counter force opposite to a pressing force exerted by the press sheet 440. Such a pressing force can keep the boss 432 from expanding and deforming to a certain extent. In this way, the boss 432 can continue to prevent the press sheet 440 from rotating. Therefore, with the cooperation between the boss 432 and the first inclined surface 432a, a capability of the lower insulator 430 to stop the press sheet 440 from rotating can be significantly improved, and thus influence of the rotation of the press sheet 440 relative to the lower insulator 40 when press sheet 440 is driven by the pole 142 on product yield can be avoided.

It should be understood that the press sheet 440 is limited in the via hole 4311 by designing the via hole 4311 into a non-circular shape and adapting the shape of the press sheet 440 to the shape of the via hole 4311. In an embodiment, the non-circular shape includes, but is not limited to, a rectangular shape, an oval shape, a waisted circular shape, a triangle shape, a trapezoid shape, or other regular or irregular polygonal shape.

In the embodiment of the present disclosure, an orthographic projection of the press sheet 440 in the third direction D3 on a plane where the first surface 410a is located is in a rounded rectangular shape with one cut-out corner. AR angle of the remaining three corners of the rounded rectangular shape is 2 mm, and the present disclosure is not limited in this regard.

In an embodiment, a gap between an outer peripheral surface of the press sheet 440 and a first hole wall surface 4311a of the via hole 4311 may be 0.1 mm, and the present disclosure is not limited in this regard.

It is worthily mentioned that a side surface of boss 432 facing away from the press sheet 440 is an outer annular surface, and the outer annular surface surrounds a periphery of press sheet 440. The outer annular surface has a first inclined surface 432a.

In an embodiment, all of the outer annular surface may be the first inclined surface 432a, and may include a flat surface, a curved surface, or a combination thereof.

In another embodiment, a part of the outer annular surface may be the first inclined surface 432a, and may include a flat surface, a curved surface, or a combination thereof. The rest of the outer annular surface may be a surface parallel to the axis of the pole 420.

Referring to FIG. 8, FIG. 12, and FIG. 13, the boss 432 further has a second inclined surface 432c. The second inclined surface 432c is connected to the top surface 432b and extends obliquely towards the axis of the pole 420 from the top surface 432b to the first hole wall surface 4311a of the via hole 4311.

It should be noted that when the press sheet 440 is welded to the pole 420, the press sheet 440 may be slightly extended in a radial direction of the pole 420 due to an influence of heat generated in a welding process. The lower insulator 430 may be pressed when the press sheet 440 is extended, and a mutual pressing between the press sheet 440 and the lower insulator 430 may cause deformation of both the press sheet 440 and the lower insulator 430.

In the embodiment of the present disclosure, the boss 432 further has the second inclined surface 432c. The second inclined surface 432c is connected to the top surface 432b and extends obliquely towards the axis of the pole 420 from the top surface 432b to the first hole wall surface 4311a of the via hole 4311, to provide a larger distance between the boss 432 and the outer peripheral surface of the press sheet 440. When the press sheet 440 is welded to the pole 420, a larger gap between the boss 432 and the press sheet 440 can provide a space for an extension of the press sheet 440. Therefore, the press sheet 440 is prevented from being deformed due to the pressing of the lower insulator 430. Further, the lower insulator 430 will not be deformed due to the pressing of the press sheet 440, thereby avoiding influence on the strength due to the deformation of the lower insulator 430.

It is worthily mentioned that a side surface of the boss 432 facing towards the press sheet 440 is an inner annular surface, and the inner annular surface surrounds the periphery of the press sheet 440. The inner annular surface has the second inclined surface 432c.

In an embodiment, all of the inner annular surface may be the second inclined surface 432c, and may include a flat surface, a curved surface, or a combination thereof.

In another embodiment, a part of the inner annular surface may be the second inclined surface 432c, and may include a flat surface, a curved surface, or a combination thereof. The rest of the inner annular surface may be a surface parallel to the axis of the pole 420.

Referring to FIG. 8, a distance between the top surface 432b and the fourth surface 431b is H (a height by which the boss 432 protrudes from the fourth surface 431b is H). A dimension of the top surface 432b in a radial direction of the pole 420 is L. A ratio of L to H ranges from 3 to 30. For example, the ratio of L to H is 3, 5, 7, 9, 10, 15, 20, 25 or 30.

In the embodiment of the present disclosure, when the ratio of L to H ranges from 3 to 30, the height of the boss 432 does not increase a thickness of the end cover assembly 400 too much, and thus does not occupy a space of the energy storage device 1 in the third direction D3, which is conducive to improving an energy density per unit volume of the energy storage device 1.

As shown in FIG. 5, FIG. 7, and FIG. 8, the end plate 410 further has a depression 412 recessed towards the second surface 410b from the first surface 410a, and the mounting hole 411 penetrates a bottom surface of the depression 412. In the embodiment of the present disclosure, the end plate 410 has two depressions 412, and the two mounting holes 411 correspond to the two depressions 412, respectively.

In the thickness direction (the third direction D3) of the end cover assembly 400, the press sheet 440 is partially accommodated in the depression 412. In the embodiment of the present disclosure, the end plate 410 has the depression 412, and the press sheet 440 is partially accommodated in the depression 412, allowing the press sheet 440 not to extend beyond the first surface 410a of the end plate 410 too much. Therefore, the thickness of the end cover assembly 400 can be further reduced.

As shown in FIG. 7 and FIG. 8, the lower insulator 430 further includes an insulation protrusion 433 integrally protruding from the third surface 431a. The insulation protrusion 433 is accommodated in the depression 412. In addition, the insulation protrusion 433 is partially arranged between the press sheet 440 and the bottom surface of the depression 412.

In the embodiment of the present disclosure, the insulation protrusion 433 of the lower insulator 430 is configured to insulate the press sheet 440 from the end plate 410, and is accommodated in the depression 412. In this way, the thickness of the end cover assembly 400 can be further reduced.

As shown in FIG. 8, the insulation protrusion 433 includes a first segment 4331 and a second segment 4332. The first segment 4331 extends beyond the third surface 431a in the thickness direction (the third direction D3) of the end cover assembly 400. A side surface of the first segment 4331 facing towards the pole 420 is flush with the first hole wall surface 4311a of the via hole 4311. The second segment 4332 is connected to the side surface of the first segment 4331 facing towards the pole 420, and is arranged between the press sheet 440 and the bottom surface of the depression 412.

In the embodiment of the present disclosure, the first segment 4331 extends beyond the third surface 431a, and the boss 432 protrudes from the fourth surface 431b. The first segment 4331, the boss 432, and a part of the insulation sheet 431 close to the press sheet 440 together surround the periphery of the press sheet 440, and they can all stop the press sheet 440 from rotating about the axis of the pole 420. An arrangement of the first segment 4331 further increases a thickness of a part of the lower insulator 430 close to the press sheet 440, which further improves the capability of the lower insulator 430 to stop the press sheet 440 from rotating.

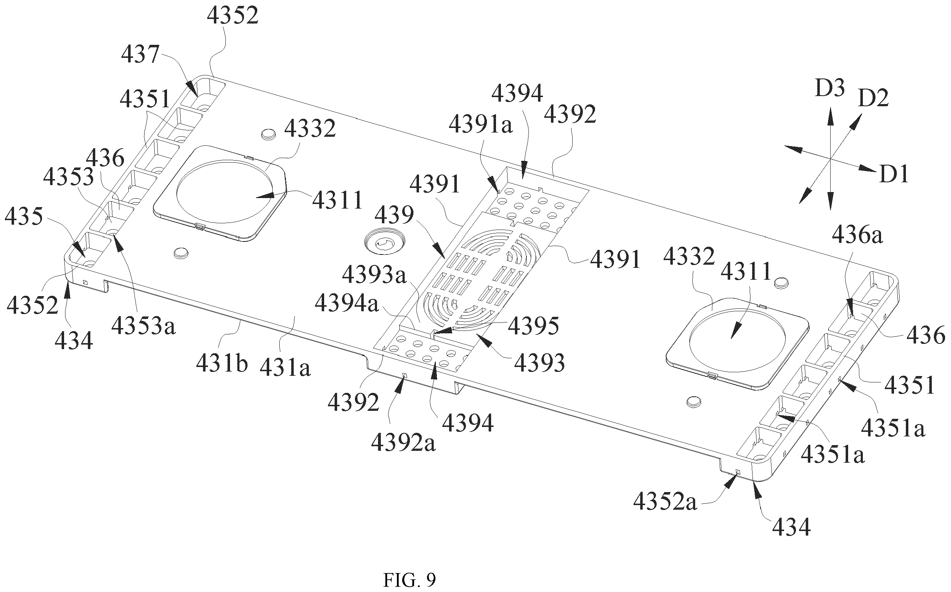

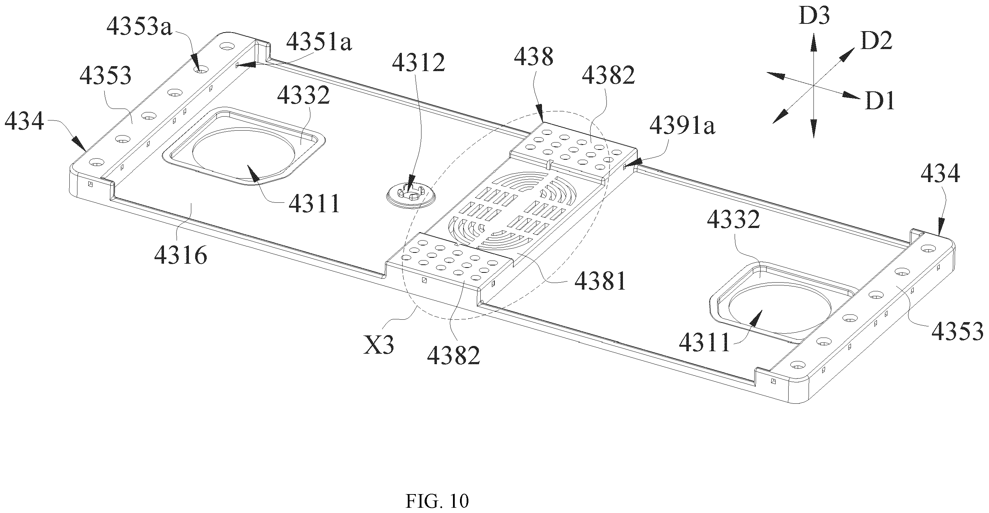

As shown in FIG. 9 and FIG. 10, the insulation sheet 431 of the lower insulator 430 has two via holes 4311. The two via holes 4311 are used for the two pole bodies 421 of the two poles 420 to pass therethrough, respectively. The two press sheets 440 are limited in the two via holes 4311, respectively.

The insulation sheet 431 further has an aperture 4312 penetrating the third surface 431a and the fourth surface 431b. A position of the aperture 4312 corresponds to a position of the injection hole 414 of the end plate 410. In a process of injecting the electrolyte into the energy storage device 1, the electrolyte flows into the housing 200 through the injection hole 414 and the aperture 4312 sequentially.

It should be noted that the shape of the via hole 4311 is adapted to a shape of the press sheet 440, and the second segment 4332 surrounds a periphery of the pole 420 and the periphery of the upper insulator 460. In the embodiment of the present disclosure, as shown in FIG. 9 and FIG. 10, a hole surrounded by the second segment 4332 is in a circular shape, and the present disclosure is not limited in this regard.

Referring to FIG. 9 and FIG. 10, each of two ends of the lower insulator 430 in the length direction (the first direction D1) of the end cover assembly 400 is provided with a protrusion 434. The protrusion 434 protrudes from the fourth surface 431b. Two side surfaces of the two protrusions 434 opposite to each other in the first direction D1 are flush with two side surfaces of the insulation sheet 431 opposite to each other in the first direction D1, respectively. Two end surfaces of the protrusion 434 opposite to each other in the second direction D2 are flush with two side surfaces of the insulation sheet 431 opposite to each other in the second direction D2, respectively. It may be appreciated that a dimension of the protrusion 434 in the second direction D2 is the same as a dimension of the insulation sheet 431 in the second direction D2.

First recesses 435 are formed in a region of the third surface 431a of the insulation sheet 131 corresponding to the protrusions 434. The first recesses 435 are each recessed from the third surface 431a towards the protrusion 434 in the thickness direction (the third direction D3) of the end cover assembly 400. Each of the first recesses 435 has two first sidewalls 4351 opposite to each other in the length direction (the first direction D1) of the end cover assembly 400 and two second sidewalls 4352 opposite to each other in the width direction (the second direction D2) of the end cover assembly 400. By forming the first recesses 435 in the region corresponding to the protrusions 434, a depth of each of the first recesses 435 can be ensured. A weight of the lower insulator 430 can be reduced while saving material cost of the lower insulator 430, which is beneficial to realizing a lightweight design of the energy storage device 1.

Each first sidewall 4351 has a plurality of first through holes 4351a arranged in the width direction (the second direction D2) of the end cover assembly 400. Each first through hole 4351a penetrates the first sidewall 4351 in the length direction (the first direction D1) of the end cover assembly 400. Each second sidewall 4352 has a second through hole 4352a penetrating the second sidewall 4352 in the second direction D2. A first bottom wall 4353 of the first recess 435 has a plurality of third through holes 4353a arranged in the second direction D2. Each third through hole 4353a penetrates the first bottom wall 4353 in the third direction D3.

A plurality of reinforcement plates 436 are arranged in the first recess 435. Each reinforcement plate 436 protrudes from a bottom surface of the first recess 435 and is connected between the two first sidewalls 4351. The plurality of reinforcement plates 436 are arranged at intervals in the width direction (the second direction D2) of the end cover assembly 400, and the first recess 435 is divided into a plurality of backflow grooves 437 by the plurality of reinforcement plates 436. In the embodiment of the present disclosure, five reinforcement plates 436 are provided in each first recess 435, and the first recess 435 is divided into six backflow grooves 437 by the five reinforcement plates 436, the present disclosure is not limited in this regard.

The plurality of backflow grooves 437 are respectively in communication with the plurality of first through holes 4351a at each first sidewall 4351, and are respectively in communication with the plurality of third through holes 4353a. It should be understood that each backflow groove 437 has a third through hole 4353a formed at a bottom of the backflow groove 437, and two sidewalls of each of the backflow grooves 437 opposite to each other in the first direction D1 each has a first through hole 4351a. Further, two of the plurality of backflow grooves 437 located at ends of the plurality of backflow grooves 437 in the second direction D2 are each in communication with one second through hole 4352a.

It should be noted that, in the process of injecting the electrolyte or using the energy storage device 1, the electrolyte easily flows into the plurality of backflow grooves 437 and remains in the backflow grooves 437 without backflow, thereby forming accumulated liquid in the backflow grooves 437, which would affect cycle life of the energy storage device 1.

In the embodiment of the present disclosure, each backflow groove 437 is in communication with both the third through hole 4353a and the first through hole 4351a. The two backflow grooves 437 located at the ends of the plurality of backflow grooves 437 in the second direction D2 are also in communication with the second through hole 4352a. The first through hole 4351a, the second through hole 4352a, and the third through hole 4353a can guide the accumulated liquid remaining in the backflow grooves 437 back to the electrode assembly 600. In this way, the electrolyte can be back flowed and reused. Therefore, the electrolyte can be prevented from remaining in the backflow grooves 437, improving a wettability of the electrode assembly 600 and prolonging the cycle life of the energy storage device 1.

In an embodiment, the first through hole 4351a and the second through hole 4352a may each be in a square shape, a circular shape, or other suitable shapes. When the first through hole 4351a and the second through hole 4352a each are in the square shape, a side length of the square ranges from 0.1 mm to 5 mm. For example, the side length is 0.1 mm, 1 mm, 2 mm, 3 mm, 4 mm, and 5 mm. When the first through hole 4351a and the second through hole 4352a each are in the circular shape, a diameter of the circular shape ranges from 0.1 mm to 5 mm. For example, the diameter is 0.1 mm, 1 mm, 2 mm, 3 mm, 4 mm, and 5 mm. By designing a diameter of the through hole to range from 0.1 mm to 5 mm, the through hole can not only guide the electrolyte, but also can not weaken the structural strength of the lower insulator 430.

The first through hole 4351a is formed at a connection between the first sidewall 4351 and the first bottom wall 4353. In an exemplary embodiment of the present disclosure, a bottom surface of the first bottom wall 4353 serves as a part of a hole wall of the first through hole 4351a. The second through hole 4352a is formed at a connection between the second sidewall 4352 and the first bottom wall 4353. In an exemplary embodiment of the present disclosure, the bottom surface of the first bottom wall 4353 serves as a part of a hole wall of the second through hole 4352a.

In the embodiment of the present disclosure, by forming the first through hole 4351a at the connection between the first sidewall 4351 and the first bottom wall 4353 and forming the second through hole 4352a at the connection between the second sidewall 4352 and the first bottom wall 4353, the electrolyte remaining in the backflow groove 437 can be more easily flow back to the electrode assembly 600 through at least one of the first through hole 4351a and the second through hole 4352a.

As shown in FIG. 9, each reinforcement plate 436 has a fourth through hole 436a. The fourth through hole 436a penetrating the reinforcement plate 436 in the width direction (the second direction D2) of the end cover assembly 400. In an embodiment, an upper surface of the reinforcement plate 436 facing away from the first bottom wall 4353 may be flush with the second surface 410b of the insulation sheet 431.

In the embodiment of the present disclosure, when the energy storage device 1 is placed laterally or in other inclined postures, the fourth through hole 436a can allow the electrolyte to flow between two adjacent backflow grooves 437. In this way, the electrolyte in the backflow groove 437 located at one end of the plurality of backflow grooves 437 in the second direction D2 flows into the backflow groove 437 located at another end of the plurality of backflow grooves 437 through the plurality of fourth through holes 436a, and then flows back to the electrode assembly 600 through the second through hole 4352a. Therefore, a problem that the electrolyte in the backflow groove 437 cannot flow back to the electrode assembly 600 only through the first through hole 4351a and the third through hole 4353a but remains in the backflow groove 437 when the energy storage device 1 is placed in a certain inclined posture can be avoided.

In an embodiment, the fourth through hole 436a may be in a square shape, a circular shape, or other suitable shapes. When the fourth through hole 436a is in the square shape, a side length of the square shape ranges from 0.1 mm to 5 mm. For example, the side length is 0.1 mm, 1 mm, 2 mm, 3 mm, 4 mm, and 5 mm. When the fourth through hole 436a is in the circular shape, a diameter of the circle shape ranges from 0.1 mm to 5 mm. For example, the diameter is 0.1 mm, 1 mm, 2 mm, 3 mm, 4 mm, or 5 mm. By designing a diameter of the through hole to range from 0.1mm to 5 mm, the through hole can not only guide the electrolyte, but also can not weaken the structural strength of the lower insulator 430.

The fourth through hole 436a is formed at a connection between the reinforcement plate 436 and the first bottom wall 4353. In an exemplary embodiment of the present disclosure, the bottom surface of the first bottom wall 4353 serves as a part of the hole wall of the first through hole 4351a. by forming the fourth through hole 436a at the connection between the reinforcement plate 436 and the first bottom wall 4353, the electrolyte remaining in the backflow groove 437 can flow more easily between adjacent backflow grooves 437 through the fourth through hole 436a.

Referring to FIG. 9 and FIG. 10, a projection 438 is provided at a position of the lower insulator 430 corresponding to the explosion-proof valve 450. The projection 438 protrudes from the fourth surface 431b. Two side surfaces of the projection 438 opposite to each other in the second direction D2 are flush with the two side surfaces of the insulation sheet 431 opposite to each other in the second direction D2, respectively. It may be appreciated that a dimension of the projection 438 in the second direction D2 is the same as a width of the insulation sheet 431 in the second direction D2.

A second recess 439 is formed in a region of the third surface 431a of the insulation sheet 431 corresponding to the projection 438. The second recess 439 is recessed towards the projection 438 from the third surface 431a in the thickness direction (the third direction D3) of the end cover assembly 400. The second recess 439 has two third sidewalls 4391 opposite to each other in the length direction (the first direction D1) of the end cover assembly 400 and two fourth sidewalls 4392 opposite to each other in the width direction (the second direction D2) of the end cover assembly 400. Each third sidewall 4391 has a fifth through hole 4391a. the fifth through hole 4391a penetrates the third sidewall 4391 in the length direction (the first direction D1) of the end cover assembly 400. Each fourth sidewall 4392 has a sixth through hole 4392a. The sixth through hole 4392a penetrates the fourth sidewall 4392 in the width direction (the second direction D2) of the end cover assembly 400.

In the embodiment of the present disclosure, the fifth through holes 4391a and the sixth through holes 4392a can guide the accumulated liquid remaining in the second recess 439 back to the electrode assembly 600. In this way, the electrolyte can be returned and reused. Therefore, the electrolyte can be prevented from remaining in the second recess 439, improving the wettability of the electrode assembly 600 and prolonging the cycle life of the energy storage device 1.

The fifth through hole 4391a is formed at a connection between the third sidewall 4391 and a bottom wall of the second recess 439, and a sixth through hole 4392a is formed at a connection between the fourth sidewall 4392 and the bottom wall of the second recess 439.

In an embodiment, each of the fifth through hole 4391a and the sixth through hole 4392a may be in a square shape, a circular shape, or other suitable shapes. When the fifth through hole 4391a and the sixth through hole 4392a each are in the square shape, a side length of the square ranges from 0.1 mm to 5 mm. For example, the side length is 0.1 mm, 1 mm, 2 mm, 3 mm, 4 mm, and 5 mm. When the fifth through hole 4391a and the sixth through hole 4392a each are in the circular shape, a diameter of the circular shape ranges from 0.1 mm to 5 mm. For example, the diameter is 0.1 mm, 1 mm, 2 mm, 3 mm, 4 mm, and 5 mm. By designing a diameter of the through hole to range from 0.1 mm to 5 mm, the through hole can not only guide the electrolyte, but also can not weaken the structural strength of the lower insulator 430.

As shown in FIG. 9 and FIG. 10, the projection 438 includes a middle section 4381 and two side sections 4382. The middle section 4371 corresponds to the explosion-proof valve 450. The two side sections 4382 are respectively connected to two ends of the middle section 4381 in the width direction (the second direction D2) of the end cover assembly 400. A height by which the middle section 4381 protrudes from the fourth surface 431b is smaller than a height by which the side section 4382 protrudes from the fourth surface 431b.

As an example, the height by which the side section 4382 protrudes from the fourth surface 431b is equal to a height by which the protrusion 434 protrudes from the fourth surface 431b.

The second recess 439 includes a first sub-recess 4393 and two second sub-recesses 4394. The first sub-recess 4393 is recessed towards the middle section 4381 from the third surface 431a in the thickness direction (the third direction D3) of the end cover assembly 400. The two second sub-recesses 4394 are recessed towards the two side sections 4382 from the third surface 431a in the thickness direction (the third direction D3) of the end cover assembly 400, respectively. A depth of the second sub-recess 4394 is greater than a depth of the first sub-recess 4393.

Each second sub-recess 4394 has a fourth sidewall 4392 and a sub-recess sidewall 4394a opposite to the fourth sidewall 4392 in the width direction (the second direction D2) of the end cover assembly 400. Two sides of a second bottom wall 4393a of the first sub-recess 4393 in the width direction (the second direction D2) of the end cover assembly 400 are connected to two sub-recess sidewalls 4394a, respectively. Each sub-recess sidewall 4394a having a seventh through hole 4395 at a connection between the sub-recess sidewall 4394a and the second bottom wall 4393a. The seventh through hole 4395 penetrates the sub-recess sidewall 4394a in the thickness direction (the third direction D3) of the end cover assembly 400.

It should be understood that a third sidewall 4391 is composed of a sidewall of the first sub-recess 4393 in the first direction D1 and two sidewalls of the two second sub-recesses 4394 in the first direction D1. Two sidewalls of the two second sub-recesses 4394 away from each other in the second direction D2 are two fourth sidewalls 4392, respectively. Since the depth of the second sub-recess 4394 is greater than the depth of the first sub-recess 4393, a height of the third sidewall 4391 of the second sub-recess 4394 is greater than a height of the sub-recess sidewall 4394a.

In the embodiment of the present disclosure, the seventh through hole 4395 can guide accumulated liquid remaining in the second sub-recess 4394 back to the electrode assembly 600. In this way, the electrolyte can be returned and reused. Therefore, the electrolyte can be prevented from remaining in the second sub-recess 4394, improving the wettability of the electrode assembly and prolonging the cycle life of the energy storage device 1.

It should be understood that each second sub-recess 4394 has the fifth through hole 4391a formed at two sidewalls of the second sub-recess 4394 opposite to each other in the first direction D1.

As shown in FIG. 9 and FIG. 10, the second bottom wall 4393a of the first sub-recess 4393 further has a perforation 4393b. The perforation 4393b penetrates the second bottom wall 4393a of the first sub-recess 4393 in the third direction D3. The lower insulator 430 is further provided with a grating structure 480. The grating structure 480 is disposed in the perforation 4393b and connected to a hole wall of the perforation 4393b. A position of the grating structure 480 corresponds to a position of the explosion-proof valve 450 in the third direction D3.

The grating structure 480 includes at least one first rib 481, at least one second rib 482, and at least one third rib 483. The first rib 481 is linear and extends in the first direction D1. Two ends of the first rib 481 are respectively connected to two opposite hole walls of the perforation 4393b in the first direction D1. The second rib 482 is linear and extends in the second direction D2. Two ends of the second rib 482 are respectively connected to two opposite hole walls of the perforation 4393b in the second direction D2. The third rib 483 is annular and connected to at least one first rib 481 and at least one second rib 482.

In one embodiment, the perforation 4393b is in a waisted circular shape. The two ends of the first rib 481 are respectively connected to two opposite plane hole walls of the perforation 4393b in the first direction D1, and the two ends of the second rib 482 are respectively connected to two opposite arc hole walls of the perforation 4393b in the second direction D2.

In the embodiment of the present disclosure, the grating structure 480 includes three first ribs 481, one second rib 482, and three third ribs 483. The three first ribs 481 are arranged in parallel in the second direction D2, and the second rib 482 is connected to the three first ribs 481. Three third ribs 483 surround a center of the perforation 4393b sequentially and are connected to the three first ribs 481 and the one second rib 482. In an embodiment, a ring formed by the third ribs 483 is also in a waisted circular shape.

Since a tab or a blue film is easily cracked to generate fragments during a transportation of the energy storage device 1. By providing the grating structure 480 on the second bottom wall 4393a of the first sub-recess 4393, the fragments of the tab or the blue film can be prevented from floating at a position below the explosion-proof valve 450, which would block a gas passage, thereby causing explosion-proof failure. In addition, the tab can be prevented from being in direct contact with the explosion-proof valve 450. The first rib 481, the second rib 482, and the third rib 483 are cross-connected, which can enhance a structural strength of the grating structure 480.

As shown in FIG. 9 and FIG. 10, each second sub-recess 4394 has a plurality of vent holes 490 formed at the bottom wall of the second sub-recess 4394. Each vent hole 490 penetrates the bottom wall of the second sub-recess 4394 in the third direction D3.

Gas generated inside the energy storage device 1 is accumulated in the second recess 439 through the plurality of vent holes 490 and the grating structure 480. Therefore, a gas pressure reaches a gas pressure explosion threshold of the explosion-proof valve 450, and the explosion-proof valve 450 can be rapidly exploded to quickly release the gas inside the energy storage device 1, thereby improving the safety.

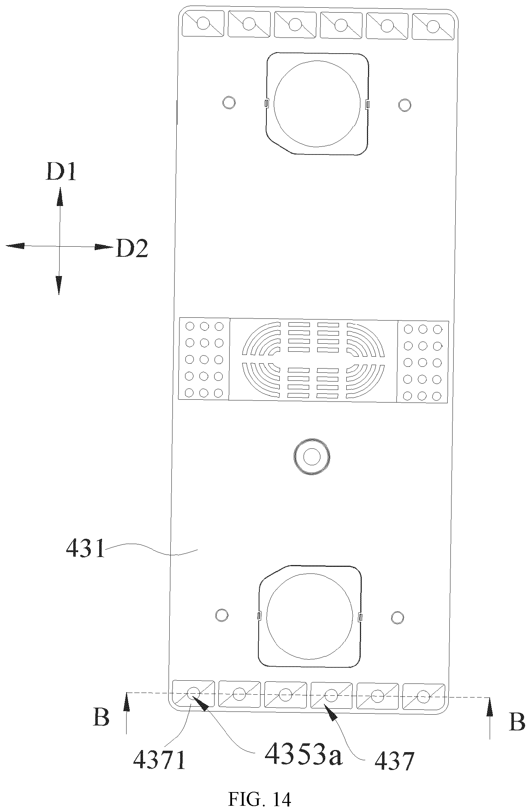

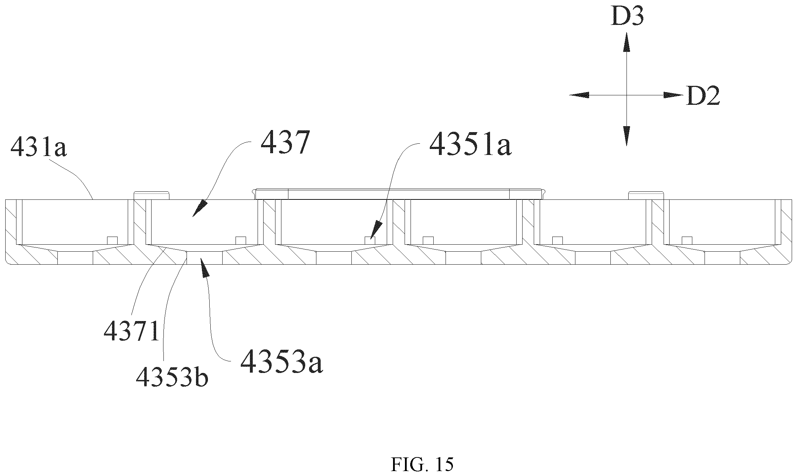

As shown in FIG. 14 and FIG. 15, each backflow groove 437 has a sloped surface 4371 on the bottom of the backflow groove 437. The sloped surface 4371 is connected to a side surface of the backflow groove 437 and extends away from the third surface 431a. Further, the sloped surface 4371 is connected to a second hole wall surface 4353b of a third through hole 4353a corresponding to the backflow groove 437.

In the embodiment of the present disclosure, each backflow groove 437 has the sloped surface 4371 on the bottom of backflow groove 437. The sloped surface 4371 extends away from the third surface 431a from the side surface of the backflow groove 437. In this way, an end of the sloped surface 4371 connected to the third through hole 4353a is a lowest part of the backflow groove 437. In this way, the electrolyte can easily flow to the third through hole 4353a along the sloped surface 4371, and then flow back through the third through hole 4353a. Therefore, the electrolyte can be prevented from being adhered to the bottom of the backflow groove 437, which would result in insufficient backflow.

As shown in FIG. 14, the third through hole 4353a is formed at a center of the bottom wall of the backflow groove 437.

In an embodiment, the third through hole 4353a is in a circular shape. An axis of the third through hole 4353a is parallel to the third direction D3. In other embodiments, the third through hole 4353a may also be in a rectangular shape, an elliptical shape or the like.

It may be appreciated that the sloped surface 4371 may include a planar surface, a curved surface, or a combination thereof.

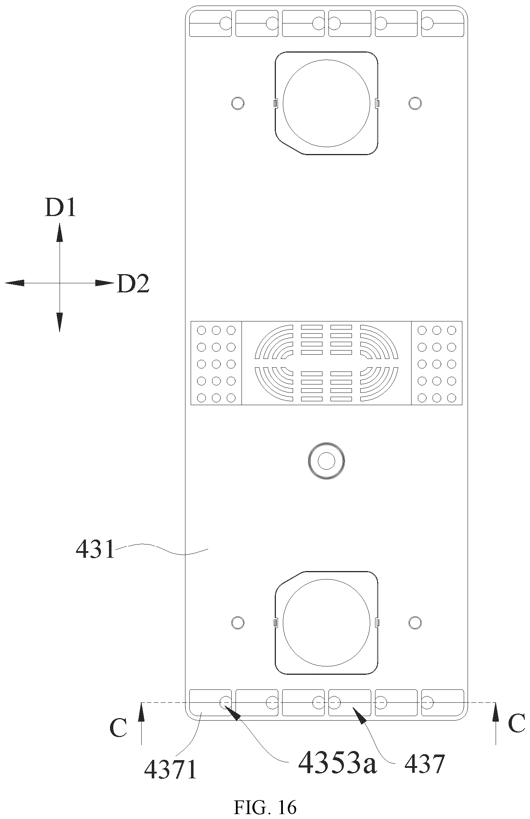

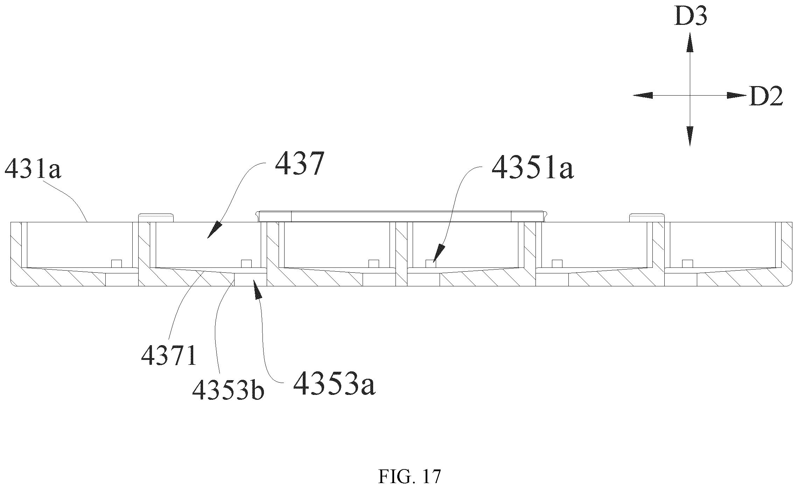

As shown in FIG. 16 and FIG. 17, the third through hole 4353a is formed at a position on the bottom wall of the backflow groove 437 close to the reinforcement plate 436. The third through hole 4353a is located at a middle position on the bottom wall of the backflow groove 437 in the length direction (i.e., the first direction D1) of the end cover assembly 400.

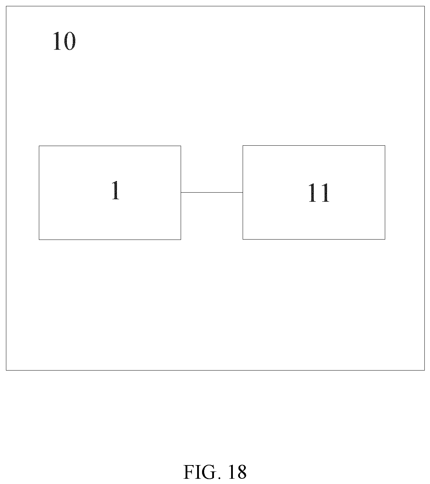

As shown in FIG. 18, embodiments of the present disclosure further provide an electric apparatus. The electric apparatus includes the energy storage device 1 as described in the above embodiments and a load 11, and the energy storage device 1 is configured to supply power to the electric apparatus.

Thus, the electric apparatus 10 including the energy storage device 1 as described above can improve an operation stability of the electric apparatus, reduce a probability of downtime of the electric apparatus, and improve the use safety of the electric apparatus.

In an embodiment, the load 11 may include, but is not limited to, a household appliance, an industrial equipment, or the like. The household appliance may include a rice cooker, a microwave oven, an oven, an induction cooker, or the like.

It should be understood that the various embodiments/implementations of in the present disclosure can be combined with each other in no contradiction, and the description thereof in detail will be omitted herein.

In the embodiments of the present disclosure, terms "first", "second", and "third" are only used for descriptive purposes, and cannot be understood as indicating or implying relative importance. The term "plurality" means at least two, unless otherwise specifically defined. Terms such as "install", "connect", "connect to", "fix" and the like should be understood in a broad sense. For example, it may be a fixed connection or a detachable connection or connection as one piece; or a direct connection or indirect connection through an intermediate. For those of ordinary skill in the art, the specific meaning of the above-mentioned terms in the present disclosure can be understood according to specific circumstances.

In descriptions of the present disclosure, it should be understood that the orientation or the position indicated by terms such as "over", "below", "left", "right", "front", and "rear" should be construed to refer to the orientation and the position as shown in the drawings in discussion, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In descriptions of the present disclosure, descriptions with reference to the terms "an embodiment", "some embodiments", "specific examples" and the like mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner

While some embodiments of the present disclosure have been described above, the present disclosure is not limited to these embodiments. For those skilled in the art, various changes and variations can be made to the present disclosure. Any modification, equivalent substitution, improvement, etc., made within the spirit and principles of the present disclosure shall fall within the scope of the present disclosure.

## Claims

1. An end cover assembly (400), comprising:
an end plate (410) having a first surface (410a) and a second surface (410b) opposite to each other in a thickness direction of the end cover assembly (400), the end plate (410) further having a mounting hole (411) penetrating the first surface (410a) and the second surface (410b);
a pole (420) limited in the mounting hole (411) and having a first end (4211) extending beyond the first surface (410a);
a press sheet (440) connected to an outer peripheral surface of the first end (4211) around the first end (4211) in a circumferential direction of the pole (420); and
a lower insulator (430) comprising an insulation sheet (431) and a boss (432), wherein:
the insulation sheet (431) has a third surface (431a) and a fourth surface (431b) opposite to each other in the thickness direction of the end cover assembly (400), the insulation sheet (431) being attached to the first surface (410a), and the third surface (431a) facing towards the first surface (410a);
the insulation sheet (431) further has a via hole (4311) penetrating the third surface (431a) and the fourth surface (43 1b), the press sheet (440) being limited in the via hole (4311);
the boss (432) integrally protrudes from the fourth surface (431b) and surrounds a periphery of the press sheet (440) in the circumferential direction of the pole (420); and
the boss (432) has a first inclined surface (432a) facing away from the press sheet (440) and a top surface (432b) facing away from the third surface (431a), the first inclined surface (432a) being connected to the fourth surface (431b) and extending obliquely towards an axis of the pole (420) from the fourth surface (431b) to the top surface (432b).

2. The end cover assembly (400) according to claim 1, wherein the boss (432) further has a second inclined surface (432c), the second inclined surface (432c) being connected to the top surface (432b) and extending obliquely towards the axis of the pole (420) from the top surface (432b) to a first hole wall surface (4311a) of the via hole (4311).

3. The end cover assembly (400) according to claim 1 or 2, wherein:
a distance between the top surface (432b) and the fourth surface (431b) is H;
a dimension of the top surface (432b) in a radial direction of the pole (420) is L; and
a ratio of L to H ranges from 3 to 30.

4. The end cover assembly (400) according to any one of claims 1 to 3, wherein:
the end plate (410) further has a depression (412) recessed towards the second surface (410b) from the first surface (410a), the mounting hole (411) penetrating a bottom surface of the depression (412);
the lower insulator (430) further comprises an insulation protrusion (433) protruding from the third surface (431a), the insulation protrusion (433) being accommodated in the depression (412) and being partially arranged between the press sheet (440) and the bottom surface of the depression (412).

5. The end cover assembly (400) according to claim 4, wherein the insulation protrusion (433) comprises:
a first segment (4331) extending beyond the third surface (431a) in the thickness direction of the end cover assembly (400), a side surface of the first segment (4331) facing towards the pole (420) being flush with a first hole wall surface (4311a) of the via hole (4311); and
a second segment (4332) connected to the side surface of the first segment (4331) facing towards the pole (420), the second segment (4332) being arranged between the press sheet (440) and the bottom surface of the depression (412).

6. The end cover assembly (400) according to claim 4 or 5, wherein the press sheet (440) is partially accommodated in the depression (412) in the thickness direction of the end cover assembly (400).

7. The end cover assembly (400) according to any one of claims 1 to 6, wherein:
each of two ends of the lower insulator (430) in a length direction of the end cover assembly (400) is provided with a protrusion (434) protruding from the fourth surface (431b);
the insulation sheet (431) has a first recess (435) formed in a region of the third surface (431a) of the insulation sheet (431) corresponding to the protrusion (434), the first recess (435) being recessed from the third surface (431a) towards the protrusion (434) in the thickness direction of the end cover assembly (400), the first recess (435) having two first sidewalls (4351) opposite to each other in the length direction of the end cover assembly (400) and two second sidewalls (4352) opposite to each other in a width direction of the end cover assembly (400);
each of the two first sidewalls (4351) has a plurality of first through holes (4351a) arranged in the width direction of the end cover assembly (400), each of the plurality of first through holes (4351a) penetrating the first sidewall (4351) in the length direction of the end cover assembly (400);
each of the two second sidewalls (4352) has a second through hole (4352a) penetrating the second sidewall (4352) in the width direction of the end cover assembly (400);
the first recess (435) has a plurality of third through holes (4353a) formed on a first bottom wall (4353) of the first recess (435), the plurality of third through holes (4353a) being arranged in the width direction of the end cover assembly (400), each of the plurality of third through holes (4353a) penetrating the first bottom wall (4353) in the thickness direction of the end cover assembly (400);
the first recess (435) is provided with a plurality of reinforcement plates (436), each of the plurality of reinforcement plates (436) protruding from a bottom surface of the first recess (435) and being connected between the two first sidewalls (4351), the plurality of reinforcement plates (436) being arranged at intervals in the width direction of the end cover assembly (400) and dividing the first recess (435) into a plurality of backflow grooves (437); and
the plurality of backflow grooves (437) are respectively in communication with the plurality of first through holes (4351a) at each of the two first sidewalls (4351), and are respectively in communication with the plurality of third through holes (4353a).

8. The end cover assembly (400) according to claim 7, wherein each of the plurality of reinforcement plates (436) has a fourth through hole (436a) penetrating the reinforcement plate (436) in the width direction of the end cover assembly (400).

9. The end cover assembly (400) according to claim 7 or 8, wherein each of the plurality of backflow grooves (437) has a sloped surface (4371) on a bottom of the backflow groove (437), the sloped surface (4371) being connected to a side surface of the backflow groove (437) and extending away from the third surface (431a), and the sloped surface (4371) being connected to a second hole wall surface (44353b) of a third through hole (4353a) of the plurality of third through hole (4353a) corresponding to the backflow groove (437).

10. The end cover assembly (400) according to any one of claims 1 to 9, wherein:
the end plate (410) further has an explosion-proof hole (413) penetrating the first surface (410a) and the second surface (410b);
the end cover assembly (400) further comprises an explosion-proof valve (450) connected to the end plate (410) and closing the explosion-proof hole (413);
the lower insulator (430) is provided with a projection (438) at a position of the lower insulator (430) corresponding to the explosion-proof valve (450), the projection (438) protruding from the fourth surface (431b);
the insulation sheet (431) has a second recess (439) formed in a region of the third surface (431a) of the insulation sheet (431) corresponding to the projection (438), the second recess (439) being recessed towards the projection (438) from the third surface (431a) in the thickness direction of the end cover assembly (400); and
the second recess (439) has two third sidewalls (4391) opposite to each other in a length direction of the end cover assembly (400) and two fourth sidewalls (4392) opposite to each other in a width direction of the end cover assembly (400), each of the two third sidewalls (4391) having a fifth through hole (4391a) penetrating the third sidewall (4391) in the length direction of the end cover assembly (400), and each of the two fourth sidewalls (4392) having a sixth through hole (4392a) penetrating the fourth sidewall (4392) in the width direction of the end cover assembly (400).

11. The end cover assembly (400) according to claim 10, wherein:
the projection (438) comprises a middle section (4381) and two side sections (4382), the middle section (4381) corresponding to the explosion-proof valve (450), the two side sections (4382) being respectively connected to two ends of the middle section (4381) in the width direction of the end cover assembly (400), and a height by which the middle section (4381) protrudes from the fourth surface (431b) being smaller than a height by which the two side sections (4382) protrudes from the fourth surface (431b);
the second recess (439) comprises a first sub-recess (4393) and two second sub-recesses (4394), the first sub-recess (4393) being recessed towards the middle section (4381) from the third surface (431a) in the thickness direction of the end cover assembly (400), and the two second sub-recesses (4394) being recessed towards the two side sections (4382) from the third surface (431a) in the thickness direction of the end cover assembly (400), respectively; and
each of the two second sub-recesses (4394) has one of the two fourth sidewalls (4392) and a sub-recess sidewall (4394a) opposite to the fourth sidewall (4392) in the width direction of the end cover assembly (400), two sides of a second bottom wall (4393a) of the first sub-recess (4393) in the width direction of the end cover assembly (400) being respectively connected to two sub-recess sidewalls (4394a), each of the sub-recess sidewalls (4394a) having a seventh through hole (4395) at a connection between the sub-recess sidewall (4394a) and the second bottom wall (4393a), and the seventh through hole (4395) penetrating the sub-recess sidewall (4394a) in the thickness direction of the end cover assembly (400).

12. An energy storage device (1), comprising:
a housing (200) having an accommodation chamber (210) with an opening (201);
an electrode assembly (600) received in the accommodation chamber (210); and
the end cover assembly (400) according to any one of claims 1 to 11, the end cover assembly (400) closing the opening (201) of the accommodation chamber (210).

13. An electric apparatus (10), comprising the energy storage device (1) according to claim 12, the energy storage device (1) being configured to supply power to the electric apparatus (10).
